(19) Europäisches Patentamt
European Patent Office
Office européen des brevets

(11) EP 1 538 465 A1

(12) **EUROPEAN PATENT APPLICATION**

(43) Date of publication:
**08.06.2005 Bulletin 2005/23**

(51) Int Cl.[7]: **G02B 1/04**, G02B 6/132, G02B 6/138, C08L 79/08

(21) Application number: **04028769.0**

(22) Date of filing: **03.12.2004**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **04.12.2003 JP 2003406331**

(71) Applicant: **NITTO DENKO CORPORATION**
**Osaka (JP)**

(72) Inventors:
- **Mune, Kazunori**
  **Ibaraki-shi Osaka (JP)**
- **Mochizuki, Amane**
  **Ibaraki-shi Osaka (JP)**
- **Naitou, Ryusuke**
  **Ibaraki-shi Osaka (JP)**
- **Tagawa, Kenichi**
  **Ibaraki-shi Osaka (JP)**

(74) Representative: **Grünecker, Kinkeldey, Stockmair & Schwanhäusser Anwaltssozietät**
**Maximilianstrasse 58**
**80538 München (DE)**

(54) **Process for producing optical waveguide**

(57) The invention provides a process for producing an optical waveguide, which comprises the steps of: continuously applying a polyimide resin precursor layer on a long-sheet substrate and then curing the layer to form a lower cladding layer; continuously applying a photosensitive polyimide resin precursor layer on the lower cladding layer; continuously exposing the applied photosensitive polyimide resin precursor layer to a light through a photomask having a predetermined pattern; continuously conducting post-exposure heating of the exposed polyimide resin precursor layer; continuously developing the polyimide resin precursor layer after the heating to thereby remove unexposed areas thereof and give a predetermined pattern; curing the developed polyimide resin precursor layer to thereby form a core layer having the predetermined pattern on the lower cladding layer; and continuously applying a polyimide resin precursor layer over the lower cladding layer so as to cover the core layer and then curing the precursor layer to thereby form an upper cladding layer.

FIG. 1 (a)

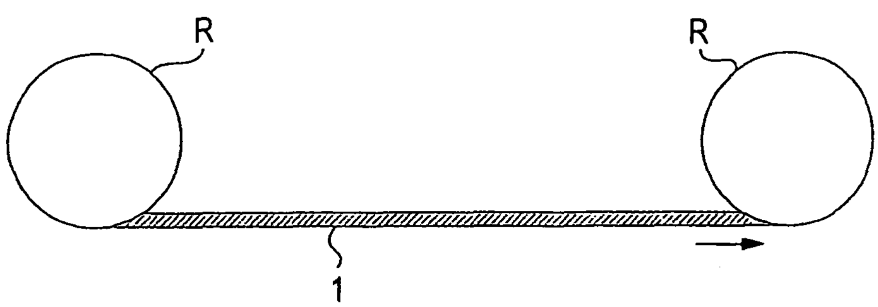


EP 1 538 465 A1

FIG. 1 (b)

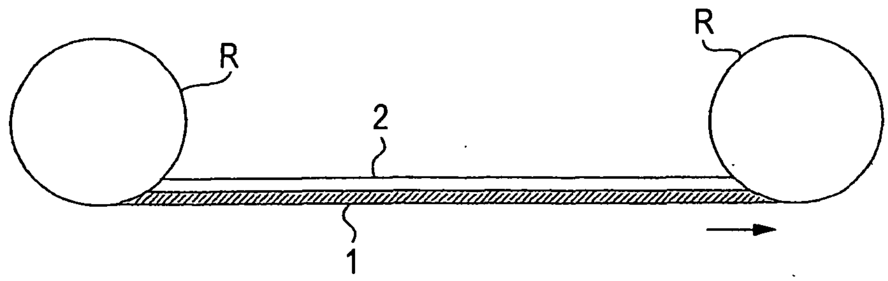


FIG. 1 (c)

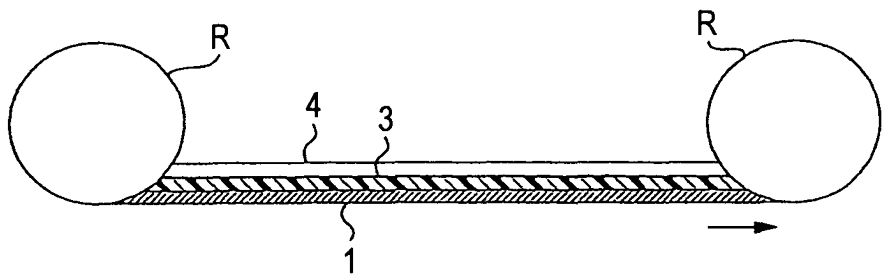


FIG. 1 (d)

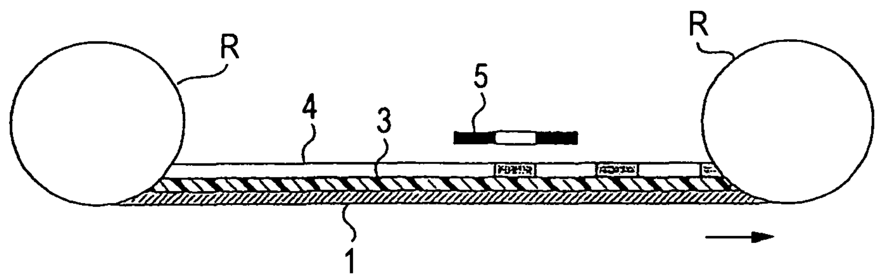


FIG. 1 (e)

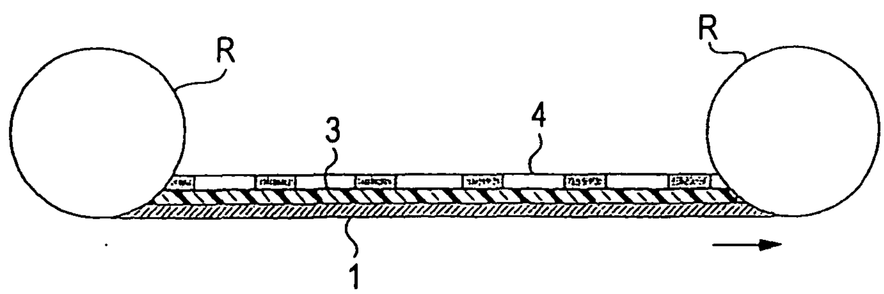

**Description**

FIELD OF THE INVENTION

The present invention relates to a process for producing an optical waveguide. More particularly, the invention relates to a process for producing an optical waveguide for optically connecting optical devices to each other.

BACKGROUND OF THE INVENTION

Optical waveguides, which are used for optically connecting optical devices to each other, are being developed because optical communication systems have come to be practically used as a result of the development of optical fibers.

It is known that such optical waveguides can be mass-produced at low cost by using, e.g., a photosensitive polyimide resin precursor composition excellent in heat resistance and transparency (see, for example, patent document 1).

Patent Document 1: JP 2002-356615 A

However, the process described in patent document 1 has limitations in improving suitability for mass production and attaining a cost reduction based on the suitability for mass production, because optical waveguides in the process are produced virtually by a sheet-by-sheet method (batch method) using a mold.

SUMMARY OF THE INVENTION

An object of the invention is to provide a process for optical-waveguide production, which can sufficiently attain an improvement in suitability for mass production and a cost reduction.

Other objects and effects of the invention will become apparent from the following description.

In order to accomplish the above-mentioned objects, the invention provides a process for producing an optical waveguide which comprises the steps of:

continuously applying a polyimide resin precursor layer on a long-sheet substrate and then curing the layer to form a lower cladding layer;
continuously applying a photosensitive polyimide resin precursor layer on the lower cladding layer;
continuously exposing the applied photosensitive polyimide resin precursor layer to a light through a photomask having a predetermined pattern;
continuously conducting post-exposure heating of the exposed polyimide resin precursor layer;
continuously developing the polyimide resin precursor layer after the heating to thereby remove unexposed areas thereof and give a predetermined pattern;
curing the developed polyimide resin precursor layer to thereby form a core layer having the predetermined pattern on the lower cladding layer; and
continuously applying a polyimide resin precursor layer over the lower cladding layer so as to cover the core layer and then curing the precursor layer to thereby form an upper cladding layer.

In the invention, the photosensitive polyimide resin precursor layer preferably comprises:

a polyimide resin precursor obtained by reacting an organic tetracarboxylic dianhydrides with a diamine; and
a photosensitizer comprising a 1,4-dihydropyridine derivative represented by the following general formula (1) :

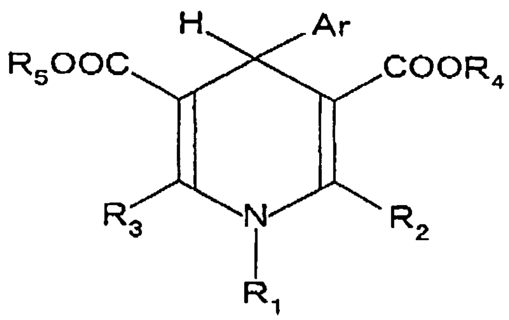

(1)

(wherein Ar represents an aromatic group having a nitro group at an ortho position with respect to the bonding position to the 1,4-dihydropyridine ring; $R_1$ represents a hydrogen atom or an alkyl group having 1 to 3 carbon atoms; and $R_2$, $R_3$, $R_4$ and $R_5$ each independently represent a hydrogen atom or an alkyl group having 1 or 2 carbon atoms).

In the process for producing an optical waveguide of the invention, a lower cladding layer is continuously formed on a substrate and a core layer having a predetermined pattern is continuously formed on the lower cladding layer. Furthermore, an upper cladding layer is continuously formed over the lower cladding layer so as to cover the core layer. Namely, a lower cladding layer, a core layer, and an upper cladding layer are each continuously formed. Because of this, this process is significantly effective in attaining an improvement in suitability for mass production as compared with the sheet-by-sheet method (batch method). Consequently, an optical waveguide comprising a polyimide resin can be efficiently produced at low cost.

BRIEF DESCRIPTION OF THE DRAWINGS

Figs. 1 are views diagrammatically illustrating steps of one embodiment of the process for optical-waveguide production of the invention:

Fig. 1(a) shows the step of preparing a long-sheet substrate;
Fig. 1(b) shows the step of continuously applying a polyimide resin precursor layer on the substrate;
Fig. 1(c) shows the step of continuously applying a photosensitive polyimide resin precursor layer on an undercladding layer;
Fig. 1(d) shows the step of continuously exposing the applied photosensitive polyimide resin precursor layer to a light through a photomask having a predetermined pattern; and
Fig. 1(e) shows the step of continuously conducting the post-exposure heating of the exposed polyimide resin precursor layer.

Figs. 2 are views diagrammatically illustrating steps succeeding the steps shown in Figs. 1, of the embodiment of the process for optical-waveguide production of the invention:

Fig. 2(f) shows the step of continuously developing the polyimide resin precursor layer after the heating;
Fig. 2(g) shows the step of continuously applying a polyimide resin precursor layer over the undercladding layer so as to cover a core layer;
Fig. 2(h) shows the step of continuously etching the substrate so as to give substrates for respective optical waveguides; and
Fig. 2(i) shows the step of cutting the web into optical waveguides.

The reference numerals used in the drawings denote the followings, respectively.

1: substrate
2: polyimide resin precursor layer
3: undercladding layer
4: photosensitive polyimide resin precursor layer

5: photomask
6: core layer
7: overcladding layer
8: polyimide resin precursor layer
9: optical waveguide

DETAILED DESCRIPTION OF THE INVENTION

Figs. 1 are views diagrammatically illustrating steps of one embodiment of the process for optical-waveguide production of the invention.

In this process, two rolls R are disposed face-to-face at a predetermined distance from each other, and one roll R is used for sending out and the other roll R is used for winding up, as shown in Figs. 1. The steps which will be described below each are continuously conducted between these rolls R, or are conducted at the time when the web is in the state of being wound on one of the rolls R. More specifically, in the case where the steps are conducted continuously, a predetermined step is performed in the following manner. The web which has undergone the steps preceding the predetermined step in the course of the production of an optical waveguide 9 and has been wound on one roll R is sent out from this roll R in the predetermined step and is wound on the other roll R. Thus, the predetermined step can be continuously conducted between these two rolls R.

In Figs. 1, all the steps are illustrated for reasons of convenience such that the web is sent out from one roll R and wound on the other roll R. In actual steps, however, there are cases where the web is sent out from the above-mentioned other roll and wound on the above-mentioned one roll R. There also are cases where one roll R and the other roll R alternately undergo sending out and winding up. An appropriate operation is selected from these according to actual steps.

In this process, a long-sheet substrate 1 is prepared first as shown in Fig. 1(a). The substrate 1 is in the form of a flat strip. For example, a foil of a metal such as stainless steel or Alloy 42 or a film of a heat-resistant resin such as, e.g., a polyimide resin is used. The thickness thereof is, for example, 5 to 200 μm, preferably 10 to 50 μm, the width thereof is, for example, 50 to 500 mm, preferably 125 to 250 mm, and the length thereof is, for example, 5 to 200 m, preferably 10 to 100 m.

The long-sheet substrate 1 is prepared, for example, in a rolled state in which the substrate 1 has been wound on one roll R and an end thereof has been passed and fixed to the other roll R in preparation for sending out toward that other roll R.

In the process of the invention, a polyimide resin precursor layer 2 for forming an undercladding layer 3 is subsequently applied continuously on the substrate 1 as shown in Fig. 1(b). For continuously applying a polyimide resin precursor layer 2, a varnish containing a polyimide resin precursor is first applied continuously on the substrate 1 which is being sent out from one roll R toward the other roll R. Subsequently, the varnish applied is continuously preliminarily dried.

The varnish containing a polyimide resin precursor is a resin solution comprising a solvent (the reaction solvent which will be described later) and a polyimide resin precursor dissolved therein. The polyimide resin precursor is a poly(amic acid) and can be obtained by reacting one or more organic tetracarboxylic dianhydrides with one or more diamines.

Examples of the organic tetracarboxylic dianhydrides include pyromellitic dianhydride, 3,3',4,4'-biphenyltetracarboxylic dianhydride, 2,2-bis(2,3-dicarboxyphenyl)propane dianhydride, 2,2-bis(3,4-dicarboxyphenyl)propane dianhydride, 3,3',4,4'-benzophenonetetracarboxylic dianhydride, bis(3,4-dicarboxyphenyl) ether dianhydride, and bis (3,4-dicarboxyphenyl)sulfonic dianhydride.

Examples thereof further include fluorine-substituted tetracarboxylic dianhydrides such as 2,2-bis(2,3-dicarboxyphenyl)hexafluoropropane dianhydride, 2,2-bis(3,4-dicarboxyphenyl)hexafluoropropane dianhydride, 4,4-bis (3,4-dicarboxytrifluorophenoxy)tetrafluorobenzene dianhydride, 1,4-bis(3,4-dicarboxytrifluorophenoxy)-tetrafluorobenzene dianhydride, (trifluoromethyl)pyromellitic dianhydride, di(trifluoromethyl)pyromellitic dianhydride, and di(heptafluoropropyl)pyromellitic dianhydride.

Those organic tetracarboxylic dianhydrides may be used singly or in combination of two or more thereof.

Examples of the diamines include m-phenylenediamine, p-phenylenediamine, 3,4'-diaminodiphenyl ether, 4,4'-diaminodiphenyl ether, 4,4'-diaminodiphenyl sulfone, 3,3'-diaminodiphenyl sulfone, 2,2-bis(4-aminophenoxyphenyl)propane, 1,3-bis(4-aminophenoxy)benzene, 1,4-bis(4-aminophenoxy)benzene, 2,4-diaminotoluene, 2,6-diaminotoluene, 4,4'-diaminodiphenylmethane, and 4,4'-diamino-2,2'-dimethylbiphenyl.

Examples thereof further include fluorine-substituted diamines such as 2,2'-bis(trifluoromethoxy)-4,4'diaminobiphenyl (TFMOB), 3,3'-diamino-5,5'-bis(trifluoromethyl)biphenyl, 2,2-bis(4-aminophenyl)hexafluoropropane (BAAF), 2,2-bis[4-(4-aminophenoxy)phenyl]hexafluoropropane (HFBAPP), 2,2'-bis(trifluoromethyl)-4,4'-diaminobiphenyl (TFMB), 2,2-bis(3-amino-4-hydroxyphenyl)hexafluoropropane (BIS-AP-AF), 2,2-bis(3-amino-4-methylphenyl)hexafluoropropane (BIS-AT-AF), 2,2'-difluorobenzidine (FBZ), 4,4'-bis(aminooctafluoro)biphenyl, 3,5-diaminobenzotrifluoride, 1,3-diamino-2,4,5,6-tetrafluorobenzene, and 2,2'-bis(trifluoromethyl)benzidine (BTFB).

Those diamines may be used singly or in combination of two or more thereof.

The polyimide resin precursor can be obtained by reacting one or more organic tetracarboxylic dianhydrides with one or more diamines in an ordinary manner. For example, an almost equimolar mixture of an organic tetracarboxylic dianhydride and a diamine is stirred in a reaction solvent for about 5 to 20 hours in an inert gas atmosphere at a temperature of 250°C or lower, preferably in the range of from room temperature (25°C) to 80°C, whereby the polyimide resin precursor can be obtained as a viscous solution, i.e., a varnish containing the polyimide resin precursor.

The reaction solvent is not particularly limited as long as the organic tetracarboxylic dianhydride and diamine dissolve therein and also the polyimide resin precursor to be obtained can dissolve therein. Examples thereof include polar solvents such as N-methyl-2-pyrrolidone, N,N-dimethylacetamide, N,N-diethylacetamide, and dimethyl sulfoxide. These polar solvents can be used singly or as a mixed solvent comprising two or more thereof.

The polyimide resin precursor thus obtained, which is used for forming an undercladding layer 3, has a weight-average molecular weight of, for example, $1.5\times10^5$ or higher, preferably $2.0\times10^5$ to $3.5\times10^5$. When the weight-average molecular weight of the polyimide resin precursor is lower than $1.5\times10^5$, there may be cases where the undercladding layer 3 cracks during the formation of an overcladding layer 7, which will be described later.

The solid concentration of the varnish containing the polyimide resin precursor is, for example, 1 to 50% by weight, preferably 5 to 30% by weight.

The polyimide resin precursor for forming an undercladding layer 3 is formulated so that the resultant undercladding layer 3 has a lower refractive index than the core layer 6 to be formed. More specifically, the refractive indexes of the core layer 6 and undercladding layer 3 are regulated so that the value of Δ defined by the following equation (1) is 0.2 to 0.8 in the case of single-mode and is 0.5 to 3.0 in the case of multimode.

$$\Delta = (n_1 - n_2) / n_1 \times 100$$

($n_1$ = refractive index of the core layer; $n_2$ =

refractive index of the undercladding layer)

Refractive index can be regulated by using two or more compounds as the organic tetracarboxylic dianhydrides or the diamine and appropriately changing the proportions thereof.

For continuously applying the varnish containing a polyimide resin precursor on the substrate 1, a known coating technique is used, such as casting, spray coating, coating with a dam coater, comma coater, or reverse-roll coater, or the like. The subsequent preliminarily drying can be conducted, for example, with a drying oven having a length of 2 to 5 m installed between the two rolls R. The substrate 1 on which the varnish containing a polyimide resin precursor has been applied can be dried by continuously passing it through the drying oven while regulating the drying temperature and traveling speed to 80 to 100°C and 0.2 to 0.5 m/min, respectively.

In this step, when the substrate 1 which has passed through the drying oven is wound on the other roll R, a spacer is interposed between the adjacent wound layers of the substrate 1 in order to prevent the polyimide resin precursor layer 2 formed on the substrate 1 from coming into contact with the substrate 1 to be wound thereon. By thus winding the substrate 1, the distance between the layers is kept at a predetermined value. In every subsequent step in which the web is wound, a spacer is interposed to keep the distance between the layers being wound at a predetermined value.

In the process of the invention, the polyimide resin precursor layer 2 formed on the substrate 1 is then cured (imidized) to thereby form an undercladding layer 3 as a lower cladding layer.

The polyimide resin precursor layer 2 can be cured in the following manner. The polyimide resin precursor layer 2 which has been wound on the other roll R is placed, in the wound state together with the roll R, in a heating oven and heated therein at, for example, 300 to 400°C, preferably 330 to 380°C, under vacuum. Thus, the polyimide resin precursor layer 2 is imidized to form an undercladding layer 3 comprising a polyimide resin.

The thickness of the undercladding layer 3 is, for example, 5 to 20 μm, preferably 10 to 20 μm.

Thereafter, in the process of the invention, a photosensitive polyimide resin precursor layer 4 for forming a core layer 6 is continuously applied on the undercladding layer 3 as shown in Fig. 1(c). For continuously applying a photosensitive polyimide resin precursor layer 4, a varnish containing a photosensitive polyimide resin precursor is first applied continuously on the undercladding layer 3 formed on the substrate 1 which is being sent out from one roll R toward the other roll R. Subsequently, the varnish applied is continuously preliminarily dried.

The varnish containing a photosensitive polyimide resin precursor can be obtained by incorporating a photosensitizer into the polyimide resin precursor varnish described above.

The polyimide resin precursor for forming a core layer 6 is formulated so that the resultant core layer 6 has a higher refractive index than the undercladding layer 3. More specifically, the refractive index thereof is regulated by using two or more compounds as the organic tetracarboxylic dianhydride or diamine and changing the proportions thereof.

The photosensitizer is not particularly limited. However, it is preferred to use a 1,4-dihydropyridine derivative represented by the following general formula (1) :

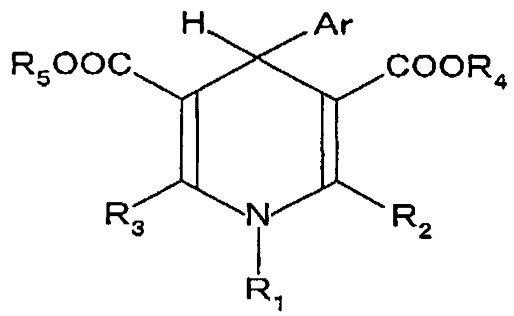

(1)

(wherein Ar represents an aromatic group having a nitro group at an ortho position with respect to the bonding position to the 1,4-dihydropyridine ring; $R_1$ represents a hydrogen atom or an alkyl group having 1 to 3 carbon atoms; and $R_2$, $R_3$, $R_4$, and $R_5$ each independently represent a hydrogen atom or an alkyl group having 1 or 2 carbon atoms).

Preferred examples of the aromatic group represented by Ar in formula (1), which is an aromatic group having a nitro group at an ortho position, include o-nitrophenyl. Preferred examples of the alkyl groups having 1, 2, or 3 carbon atoms and represented by $R_1$, $R_2$, $R_3$, $R_4$, and $R_5$ include methyl (C1), ethyl (C2), n-propyl (C3), and isopropyl (C3).

Specific examples of the 1,4-dihydropyridine derivative include 1-ethyl-3,5-dimethoxycarbonyl-4-(2-nitrophenyl)-1,4-dihydropyridine, 1-methyl-3,5-dimethoxycarbonyl-4-(2-nitrophenyl)-1,4-dihydropyridine, 1-propyl-3,5-dimethoxycarbonyl-4(2-nitrophenyl)-1,4dihydropyridine, and 1-propyl-3,5-diethoxycarbonyl-4-(2nitrophenyl)-1,4-dihydropyridine.

The proportion of the photosensitizer to be incorporated is, for example, 0.1 to 10 parts by weight, preferably 0.1 to 4 parts by weight, per 100 parts by weight of the polyimide resin precursor. When the proportion thereof is smaller than 0.1 part by weight, there may be cases where pattern formation is difficult. When the proportion thereof exceeds 10 parts by weight, there may be cases where the optical loss increases.

A dissolution control agent such as, e.g., polyethylene glycol, polypropylene glycol, polypropylene glycol diphenyl ether, or polyethylene glycol dimethyl ether may be incorporated into the varnish containing a photosensitive polyimide resin precursor. These dissolution control agents may be used singly or in combination of two or more thereof. The weight-average molecular weight of such a dissolution control agent is, for example, 150 to 1,000, preferably 200 to 800. The proportion of the dissolution control agent to be incorporated is, for example, 10 to 45 parts by weight, preferably 15 to 30 parts by weight, per 100 parts by weight of the polyimide resin precursor.

For continuously applying the varnish containing a polyimide resin precursor on the undercladding layer 3, a known coating technique is used, such as casting, spray coating, coating with a dam coater, comma coater, or reverse-roll coater, or the like. The subsequent preliminarily drying can be conducted, for example, with a drying oven having a length of 2 to 5 m installed between the two rolls R. The substrate 1 having the undercladding layer 3 on which the varnish containing a photosensitive polyimide resin precursor has been applied is continuously passed through the drying oven while regulating the drying temperature and traveling speed to 80 to 100°C and 0.2 to 0.5 m/min, respectively.

Thereafter, in the process of the invention, the photosensitive polyimide resin precursor layer 4 applied is continuously exposed to a light through a photomask 5 having a predetermined pattern as shown in Fig. 1(d).

The photomask 5 to be used is a photomask formed so as to have the same pattern as a predetermined pattern which enables exposed areas of the polyimide resin precursor layer 4 to remain after subsequent development to give a core layer 6 corresponding to the light-transmitting parts.

The exposure is conducted in the following manner. The photomask 5 is disposed between the two rolls R, and the photosensitive polyimide resin precursor layer 4 formed on the undercladding layer 3 on the substrate 1 which is being sent out from one roll R toward the other roll R is continuously exposed to a light. As an exposing apparatus, for example, an ultraviolet irradiation device having an automatic conveying function. Methods for exposure are not particularly limited, and use may be made of a known exposure technique such as, e.g., the hard contact exposure technique in which the photosensitive polyimide resin precursor layer 4 is brought into direct contact with the photomask

5, the proximity exposure technique in which the photosensitive polyimide resin precursor layer 4 and the photomask 5 are spaced from each other by a slight gap, or the projection exposure technique.

In this process, the photosensitive polyimide resin precursor layer 4 after the exposureis then subjected to post-exposure continuous heating as shown in Fig. 1(e). This post-exposure heating can be conducted, for example, with a heating oven having a length of 2 to 5 m installed between the two rolls R. The substrate 1 having the undercladding layer 3 on which the polyimide resin precursor layer 4 has been formed is continuously passed through the heating oven while regulating the heating temperature and traveling speed to 140°C or higher and 0.1 to 0.25 m/min, respectively. This post-exposure heating reduces the solubility of the exposed areas in a developing solution comprising an aqueous alkali solution and enables the unexposed areas to dissolve away in subsequent development to give a negative image.

Subsequently, in the process of the invention, the polyimide resin precursor layer 4 which has undergone the post-exposure heating is continuously developed as shown in Fig. 2(f). This exposure is conducted, for example, with a developing tank having a length of 2 to 5 m installed between the two rolls R. The substrate 1 having the undercladding layer 3 on which the polyimide resin precursor layer 4 has been formed is continuously passed through the developing tank while regulating the traveling speed to 0.2 to 0.5 m/min. Methods for development are not particularly limited, and a known technique such as, e.g., the immersion method or spraying method is used. The development temperature is generally 25 to 50°C. As a developer, used is an aqueous solution of an organic alkali such as, e.g., tetramethylammonium hydroxide or an aqueous solution of an inorganic alkali such as, e.g., sodium hydroxide or potassium hydroxide. The alkali concentration is generally 2 to 5% by weight. A lower aliphatic alcohol such as methanol, ethanol, n-propanol, or isopropanol can be added to such an aqueous alkali solution according to need. The developing tank preferably is one which has a developing chamber and a rinsing chamber.

By this development, the unexposed areas of the polyimide resin precursor layer 4 are removed to make the polyimide resin precursor layer 4 have a predetermined pattern.

In this process, the developed polyimide resin precursor layer 4 is cured to thereby form a core layer having the predetermined pattern on the undercladding layer 3. The polyimide resin precursor layer 4 can be cured in the following manner. The polyimide resin precursor layer 4 which has been wound on the other roll R after the development is placed, in the wound state together with the roll R, in a heating oven and heated therein at, for example, 300 to 400°C, preferably 330 to 380°C, under vacuum. Thus, the polyimide resin precursor layer 4 is imidized to form a core layer 6 comprising a polyimide resin and having the predetermined pattern.

The thickness of the core layer 6 is, for example, 4 to 10 µm, preferably 6 to 8 µm, in the case of single-mode and is, for example, 10 to 100 µm, preferably 30 to 50 µm, in the case of multi-mode. The core layer 6 is formed, for example, so as to have a pattern comprising lines arranged in parallel at a predetermined distance from each other.

In the process of the invention, a polyimide resin precursor layer 8 is subsequently applied continuously over the undercladding layer 3 so as to cover the core layer 6 as shown in Fig. 2(g). For continuously applying a polyimide resin precursor layer 8, a varnish containing a polyimide resin precursor is continuously applied, so as to cover the core layer 6, over the undercladding layer 3 formed on the substrate 1 which is being sent out from one roll R toward the other roll R, in the same manner as described above. The varnish applied is then continuously preliminarily dried.

The varnish containing a polyimide resin precursor is as described above for the varnish containing a polyimide resin precursor. This varnish is formulated so that the resultant overcladding layer 7 has a lower refractive index than the core layer 6. It is preferred to use a varnish having the same formulation as the varnish containing a polyimide resin precursor used for forming the undercladding layer 3.

For continuously applying the varnish containing a polyimide resin precursor on the undercladding layer 3, a known coating technique is used as in steps described above, such as casting, spray coating, coating with a dam coater, comma coater, or reverse-roll coater, or the like. The subsequent preliminarily drying also can be conducted, for example, with a drying oven having a length of 2 to 5 m installed between the two rolls R, as in the steps described above. The substrate 1 having the undercladding layer 3 on which the varnish containing a polyimide resin precursor has been applied is continuously passed through the drying oven while regulating the drying temperature and traveling speed to 80 to 100°C and 0.2 to 0.5 m/min, respectively.

Subsequently, in the process of the invention, the polyimide resin precursor layer 8 formed over the undercladding layer 3 is cured (imidized) to thereby form an overcladding layer 7 as an upper cladding layer.

The polyimide resin precursor layer 8 can be cured in the following manner. The polyimide resin precursor layer 8 which has been wound on the other roll R is placed, in the wound state together with the roll R, in a heating oven and heated therein at, for example, 300 to 400°C, preferably 330 to 380°C, under vacuum. Thus, the polyimide resin precursor layer 8 is imidized and an overcladding layer 7 comprising a polyimide resin is formed over the undercladding layer 3 so as to cover the core layer 6.

The thickness of the overcladding layer 7 is, for example, 5 to 50 µm, preferably 20 to 30 µm.

Subsequently, in the process of the invention, the substrate 1 is continuously etched so as to give patterned substrates for respective optical waveguides 9 as shown in Fig. 2(h). The etching is not particularly limited and can be

conducted, for example, in the following manner. The surface of the substrate 1 is continuously covered with an etching resist comprising a dry film or the like so as to result in the desired pattern. Thereafter, the substrate 1 is continuously wet-etched with, e.g., a ferric chloride solution and the etching resist is then continuously stripped off.

In the process of the invention, the web is then cut into optical waveguides 9 as shown in Fig. 2(i). Thus, optical waveguides 9 are obtained. This cutting into optical waveguides 9 is not particularly limited. However, a cutter, high-precision die, or the like is used to cut the web according to the pattern of the optical waveguides 9.

According to the process for producing an optical waveguide 9 described above, an undercladding layer 3 is continuously formed on a substrate 1 and a core layer 6 having a predetermined pattern is continuously formed on the undercladding layer 3. Furthermore, an overcladding layer 7 is continuously formed over the undercladding layer 3 so as to cover the core layer 6. Namely, an undercladding layer 3, core layer 6, and overcladding layer 7 are each continuously formed. Because of this, the process is significantly effective in attaining an improvement in suitability for mass production as compared with the sheet-by-sheet method (batch method). Consequently, an optical waveguide comprising a polyimide resin can be efficiently produced at low cost.

The optical waveguide 9 obtained is not particularly limited and can be used for optically connecting various optical devices. Specifically, it is used as a straight optical waveguide, bend optical waveguide, crossing optical waveguide, Y-branched optical waveguide, slab optical waveguide, Mach-Zehnder type optical waveguide, AWG type optical waveguide, grafting optical waveguide, optical waveguide lens, or the like.

Examples of optical devices connected by these optical waveguides include wavelength filters, optical switches, optical branch units, optical multiplexers, optical multiplexers/demultiplexers, optical amplifiers, wavelength modulators, wavelength division multiplexers, optical splitters, directional couplers, and optical transmission modulus having a laser diode or photodiode hybrid-integrated therewith.

In the explanations given above, in the case where the adhesion between the substrate 1 and the undercladding layer 3 is insufficient, an adhesive layer comprising, for example, a polyimide resin may be interposed therebetween. Alternatively, the surface of the substrate 1 may be subjected to a surface treatment for enhancing adhesion.

## EXAMPLES

The present invention will be illustrated in greater detail with reference to the following examples, but the invention should not be construed as being limited thereto.

### EXAMPLE 1

Synthesis of Polyimide Resin Precursor Varnish

In a 500-mL separable flask, 2,2'-bis(trifluoromethyl)-4,4'-diaminobiphenyl (TFMB) (0.09 mol (28.8 g)) was dissolved in 275.2 g of N,N-dimethylacetamide (DMAc) in a nitrogen atmosphere. 2,2-Bis(3,4-dicarboxyphenyl)-hexafluoropropane dianhydride (6FDA) (0.09 mol (40.0 g)) was added to the solution with stirring. Thereafter, the resultant mixture was stirred at room temperature for 24 hours to obtain a poly(amic acid) varnish (hereinafter referred to as a polyimide resin precursor varnish).

Synthesis of Photosensitive Polyimide Resin Precursor Varnish

To the polyimide resin precursor varnish obtained above were added 2 parts by weight of 4-o-nitrophenyl-3,5-dimethoxycarbonyl-1-ethyl-1,4-dihydropyridine and 30 parts by weight of polyethylene glycol dimethyl ether (weight-average molecular weight, 500) per 100 parts by weight of the solid content of the polyimide resin precursor varnish. This mixture was uniformly mixed by stirring to thereby obtain a photosensitive poly(amic acid) varnish (hereinafter referred to as a photosensitive polyimide resin precursor varnish).

Production of Optical Waveguide

The following steps were conducted by the roll-to-roll method to produce optical waveguides.

First, a substrate made of a stainless-steel foil having a thickness of 25 µm, width of 125 mm, and length of 100 m which had been wound on a roll was prepared (see Fig. 1(a)). Subsequently, the polyimide resin precursor varnish was continuously applied on the substrate. This varnish applied was preliminarily dried by passing the web through a drying oven having a length of 2 m (drying temperature, 90°C; traveling speed, 0.2 m/min) installed between the two rolls to thereby form a polyimide resin precursor layer (see Fig. 1(b)). Thereafter, this web was wound on a roll. In the winding, a spacer having a thickness of 1 mm was interposed between the layers being wound (a spacer was interposed in the same manner also in subsequent steps, although such a statement is omitted hereinafter).

Subsequently, the web was placed, together with the roll on which the web had been wound, in a heating oven and heated therein at 380°C under vacuum. Thus, the polyimide resin precursor layer was imidized to form an undercladding layer made of a polyimide resin. This undercladding layer had a thickness of 20 μm.

Thereafter, the photosensitive polyimide resin precursor varnish was continuously applied on the undercladding layer. This varnish applied was preliminarily dried by passing the web through a drying oven having a length of 2 m (drying temperature, 90°C; traveling speed, 0.2 m/min) installed between the two rolls to thereby form a photosensitive polyimide resin precursor layer (see Fig. 1(c)).

This photosensitive polyimide resin precursor layer was subsequently exposed continuously to a light with an ultraviolet irradiation device having an automatic conveying function (see Fig. 1(d)). In the exposure method employed, a photomask having a predetermined optical-waveguide pattern formed in an 8 cm × 8 cm region was used to conduct contact exposure to i-line (365 nm) as an exposure ray in an exposure amount of 50 $mJ/cm^2$. The polyimide resin precursor layer was thus exposed at an interval of 20 cm to form 500 negative image patterns in 100 m.

Thereafter, the exposed polyimide resin precursor layer was subjected to post-exposure heating in which the layer was passed through a heating oven having a length of 2 m (heating temperature, 180°C; traveling speed, 0.2 m/min) installed between the two rolls (see Fig. 1(e)).

Subsequently, the polyimide resin precursor layer which had undergone the post-exposure heating was continuously developed using a spray type developing tank comprising a developing chamber having a length of 3 m, first rinsing chamber having a length of 1 m, and second rinsing chamber having a length of 3 m (see Fig. 2(f)). In the development, an ethanol/10% tetramethylammonium hydroxide (volume ratio, 1:1) solution was used as a developing solution, and the polyimide resin precursor layer was continuously passed successively through these chambers at a traveling speed of 0.2 m/min while regulating the solution temperature in the developing chamber, water temperature in the first rinsing chamber, and water temperature in the second rinsing chamber to 40°C, 35°C, and 25°C, respectively. Thereafter, the web was wound on a roll. The polyimide resin precursor layer after the development had a thickness of about 8 μm, and the unexposed areas were ascertained to have been wholly removed by the development.

Subsequently, the web was placed, together with the roll on which the web had been wound, in a heating oven and heated therein at 330°C under vacuum. Thus, the developed polyimide resin precursor layer was imidized to form a core layer made of a polyimide resin and having the predetermined pattern. The core layer had a thickness of about 7 μm.

The polyimide resin precursor varnish was thereafter applied continuously over the undercladding layer so as to cover the core layer. This varnish was then preliminarily dried by passing the web through a drying oven having a length of 2 m (drying temperature, 90°C; traveling speed, 0.2 m/min) installed between the two rolls to thereby form a polyimide resin precursor layer (see Fig. 2(g)). This web was then wound on a roll.

Subsequently, the web was placed, together with the roll on which the web had been wound, in a heating oven and heated therein at 330°C under vacuum. Thus, the polyimide resin precursor layer was imidized to form an overcladding layer made of a polyimide resin. The overcladding layer had a thickness of 30 μm.

Thereafter, the surface of the substrate was continuously covered with an etching resist comprising a dry film so as to result in patterned substrates corresponding to respective optical waveguides. This substrate was continuously wet-etched with a ferric chloride solution and the etching resist was then stripped off continuously (see Fig. 2(h)). Thus, the patterned substrates corresponding to respective optical waveguides were formed.

The web thus processed was then cut with a cutter into optical waveguides. Thus, optical waveguides were obtained. (see Fig. 2(i)).

While the present invention has been described in detail and with reference to specific embodiments thereof, it will be apparent to one skilled in the art that various changes and modifications can be made therein without departing from the spirit and scope thereof.

The present application is based on Japanese patent application No. 2003-406331 filed December 4, 2003, the contents thereof being herein incorporated by reference.

## Claims

**1.** A process for producing an optical waveguide, which comprises the steps of:

continuously applying a polyimide resin precursor layer on a long-sheet substrate and then curing the layer to form a lower cladding layer;
continuously applying a photosensitive polyimide resin precursor layer on the lower cladding layer;
continuously exposing the applied photosensitive polyimide resin precursor layer to a light through a photomask having a predetermined pattern;
continuously conducting post-exposure heating of the exposed polyimide resin precursor layer;

continuously developing the polyimide resin precursor layer after the heating to thereby remove unexposed areas thereof and give a predetermined pattern;
curing the developed polyimide resin precursor layer to thereby form a core layer having the predetermined pattern on the lower cladding layer; and
continuously applying a polyimide resin precursor layer over the lower cladding layer so as to cover the core layer and then curing the precursor layer to thereby form an upper cladding layer.

**2.** The process for producing an optical waveguide of claim 1, wherein the photosensitive polyimide resin precursor layer comprises:

a polyimide resin precursor obtained by reacting an organic tetracarboxylic dianhydride with a diamine; and
a photosensitizer comprising a 1,4-dihydropyridine derivative represented by the following general formula (1):

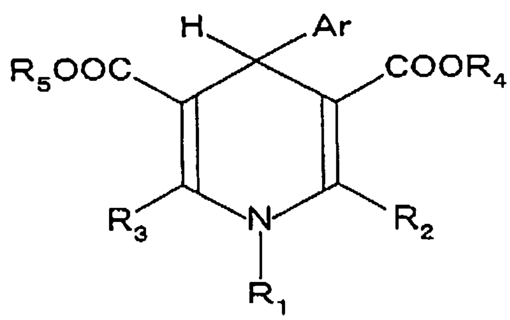

(1)

(wherein Ar represents an aromatic group having a nitro group at an ortho position with respect to the bonding position to the 1,4-dihydropyridine ring; $R_1$ represents a hydrogen atom or an alkyl group having 1 to 3 carbon atoms; and $R_2$, $R_3$, $R_4$ and $R_5$ each independently represent a hydrogen atom or an alkyl group having 1 or 2 carbon atoms).

FIG. 1 (a)

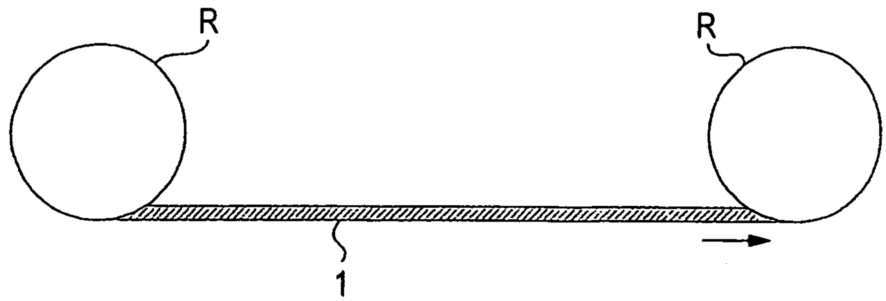


FIG. 1 (b)

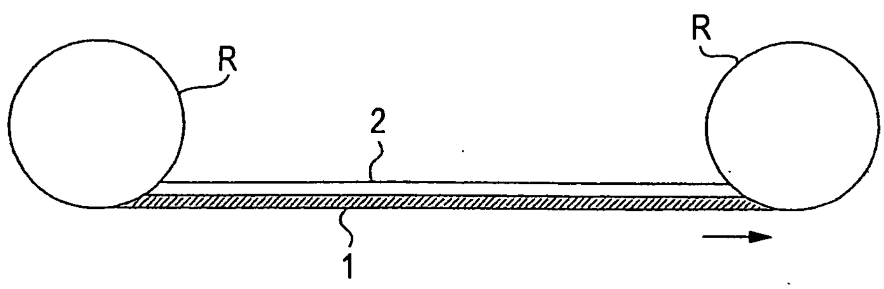


FIG. 1 (c)

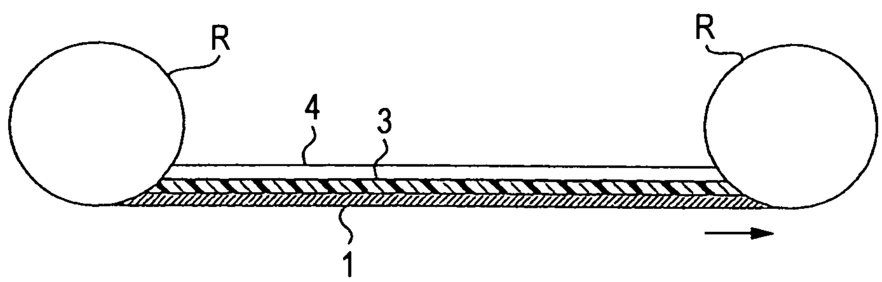


FIG. 1 (d)

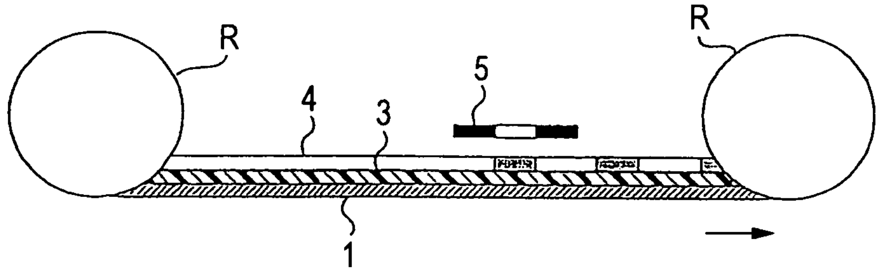


FIG. 1 (e)

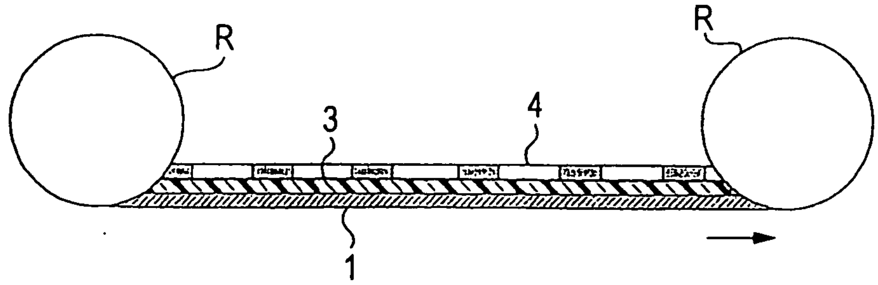

FIG. 2 (f)

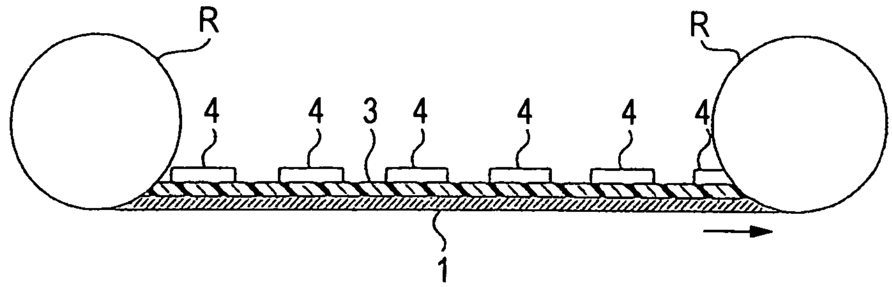


FIG. 2 (g)

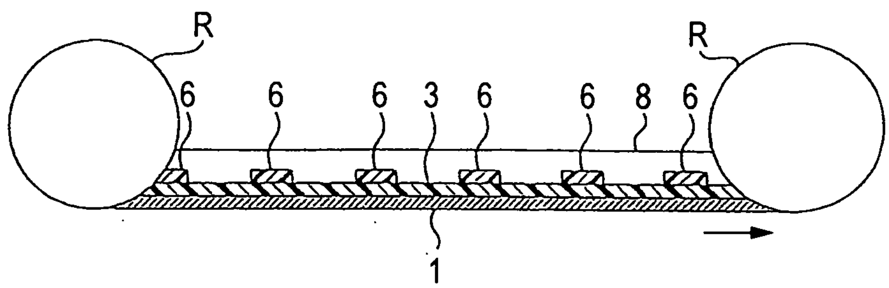


FIG. 2 (h)

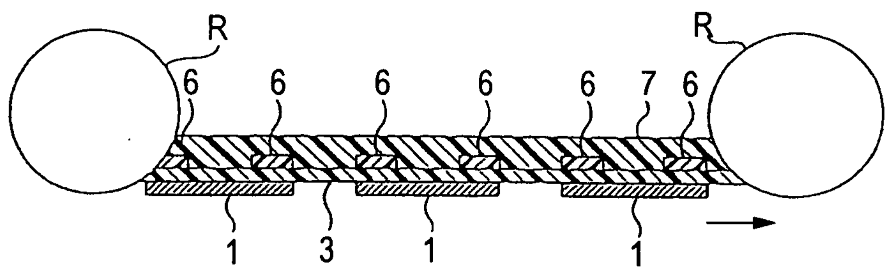


FIG. 2 (i)

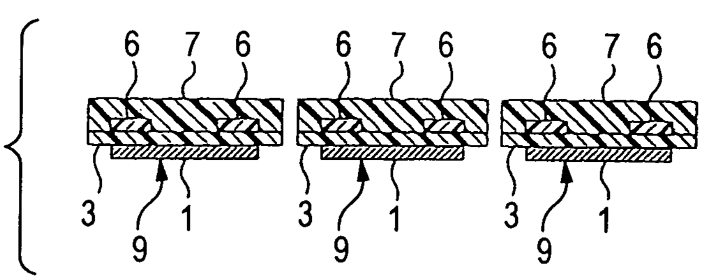

European Patent Office

# EUROPEAN SEARCH REPORT

Application Number
EP 04 02 8769

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| P,A | EP 1 424 577 A (NITTO DENKO CORPORATION) 2 June 2004 (2004-06-02) * paragraphs [0011], [0014] - [0017], [0021], [0036] - [0038]; claims 1,6 * | 1,2 | G02B1/04 G02B6/132 G02B6/138 C08L79/08 |
| P,A | EP 1 382 644 A (NITTO DENKO CORPORATION) 21 January 2004 (2004-01-21) * claims 1,6,7 * | 1,2 | |
| A | EP 1 205 804 A (NITTO DENKO CORPORATION) 15 May 2002 (2002-05-15) * paragraphs [0002] - [0006]; claims 1,2,5 * | 1,2 | |
| A | SUZUKI Y ET AL: "Serially grafted optical waveguide fabrication of NLO polyimide and transparent polymers" January 2003 (2003-01), OPTICAL MATERIALS, ELSEVIER SCIENCE PUBLISHERS B.V. AMSTERDAM, NL, PAGE(S) 521-524 , XP004395477 ISSN: 0925-3467 * page 521, left-hand column - page 522, left-hand column * | 1,2 | TECHNICAL FIELDS SEARCHED (Int.Cl.7) G02B C08L |

The present search report has been drawn up for all claims

1

| Place of search | Date of completion of the search | Examiner |
|---|---|---|
| Munich | 12 April 2005 | Heidenhain, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT ON EUROPEAN PATENT APPLICATION NO.** EP 04 02 8769

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2005

| Patent document cited in search report | Publication date | Patent family member(s) | Publication date |
|---|---|---|---|
| EP 1424577 A | 02-06-2004 | JP 2004177864 A | 24-06-2004 |
| | | CN 1504780 A | 16-06-2004 |
| | | EP 1424577 A2 | 02-06-2004 |
| | | US 2004146263 A1 | 29-07-2004 |
| EP 1382644 A | 21-01-2004 | JP 2003248311 A | 05-09-2003 |
| | | CN 1468907 A | 21-01-2004 |
| | | EP 1382644 A1 | 21-01-2004 |
| | | US 2004013953 A1 | 22-01-2004 |
| EP 1205804 A | 15-05-2002 | JP 2002148804 A | 22-05-2002 |
| | | EP 1205804 A2 | 15-05-2002 |
| | | US 2002055062 A1 | 09-05-2002 |

EPO FORM P0459

For more details about this annex : see Official Journal of the European Patent Office, No. 12/82